(19) **Europäisches Patentamt**
**European Patent Office**
**Office européen des brevets**

(11) **EP 4 568 169 A1**

(12) **EUROPEAN PATENT APPLICATION**

(43) Date of publication:
**11.06.2025 Bulletin 2025/24**

(51) International Patent Classification (IPC):
**H04L 9/06** (2006.01)

(21) Application number: **24217730.1**

(22) Date of filing: **05.12.2024**

(52) Cooperative Patent Classification (CPC):
**H04L 9/0662**; H04L 2209/805

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.12.2023 GB 202318689**

(71) Applicant: **Nokia Technologies Oy**
**02610 Espoo (FI)**

(72) Inventors:
• **BARBU, Oana-Elena**
**Aalborg (DK)**
• **BARACCA, Paolo**
**Munich (DE)**
• **VEJLGAARD, Benny**
**Gistrup (DE)**
• **KIILERICH PRATAS, Nuno Manuel**
**Aalborg (DK)**

(74) Representative: **Nokia EPO representatives**
**Nokia Technologies Oy**
**Karakaari 7**
**02610 Espoo (FI)**

(54) **COORDINATION FOR RANDOM AIOT WAVEFORM**

(57)    An apparatus including at least one processor; and at least one memory storing instructions that, when executed with the at least one processor, cause the apparatus to: receive a signal from a user device; generate a random number based, at least partially, upon seed information received from an activator, where the seed information is at least partially common to seed information in the user device; and determine information from the received signal based, at least partially, upon the generated random number.

Fig. 7

**Description**

**TECHNICAL FIELD**

The example and non-limiting embodiments relate generally to internet of things (Iot) and, more particularly, to ambient internet of things.

**BRIEF DESCRIPTION OF PRIOR DEVELOPMENTS**

Ambient Internet-of-Things (AIOT) generally relates to an ecosystem comprising a number of objects which are connected with a wireless sensor network, such as using low-cost self-powered sensor nodes for example. Standards for Ambient IoT are being considered by 3GPP, IEEE and Bluetooth SIG.

**SUMMARY OF THE INVENTION**

The following summary is merely intended to be an example. The summary is not intended to limit the scope of the claims.

In accordance with one aspect, an example apparatus is provided comprising: at least one processor; and at least one memory storing instructions that, when executed with the at least one processor, cause the apparatus to: receive a signal from a user device; generate a random number based, at least partially, upon seed information received from an activator, where the seed information is at least partially common to seed information in the user device; and determine information from the received signal based, at least partially, upon the generated random number.

In accordance with one aspect, an example method is provided comprising: receiving a signal from a user device; generating a random number based, at least partially, upon seed information received from an activator, where the seed information is at least partially common to seed information in the user device; and determining information from the received signal based, at least partially, upon the generated random number.

In accordance with one aspect, an example non-transitory program storage device readable by an apparatus is provided, tangibly embodying a program of instructions executable with the apparatus for performing operations, the operations comprising: receiving a signal from a user device; generating a random number based, at least partially, upon seed information received from an activator, where the seed information is at least partially common to seed information in the user device; and determining information from the received signal based, at least partially, upon the generated random number.

In accordance with one aspect, an example apparatus comprising: means for receiving a signal from a user device; means for generating a random number based, at least partially, upon seed information received from an activator, where the seed information is at least partially common to seed information in the user device; and means for determining information from the received signal based, at least partially, upon the generated random number.

According to some aspects, there is provided the subject matter of the independent claims. Some further aspects are provided in subject matter of the dependent claims.

**BRIEF DESCRIPTION OF DRAWINGS**

The foregoing aspects and other features are explained in the following description, taken in connection with the accompanying drawings, wherein:

FIG. 1 is a block diagram of one possible and non-limiting example system in which the example embodiments may be practiced;

FIG. 2 is a diagram illustrating a first example topology between a base station and an ambient IoT device;

FIG. 3 is a diagram illustrating a second example topology among a base station, an intermediate node, and an ambient IoT device;

FIGS. 4A and 4B are diagrams illustrating a third example topology for downlink assistance and uplink assistance, respectively, among a base station, an assisting node, and an ambient IoT device;

FIG. 5 is a diagram illustrating a forth example topology between a UE and an ambient IoT device;

FIG. 6 is a diagram illustrating an example of an ambient IoT (AIOT) device, and ambient IoT (AIOT) reader, and a random integer generator shared with the AIOT device and the AIOT reader;

FIG. 7 is a diagram illustrating an example of signaling amount the ambient IoT (AIOT) device, the reader and the activator shown in FIG. 6;

FIG. 8 is a diagram illustrating an example of a method used with an ambient IoT reader;

FIG. 9 is a diagram illustrating an example of a method;

FIG. 10 is a diagram illustrating an example of a method;

FIG. 11 is a diagram illustrating an example of a method; and

FIG. 12 is a diagram illustrating an example of a method.

**DETAILED DESCRIPTION**

The following abbreviations that may be found in the specification and/or the drawing figures are defined as follows:

| | |
|---|---|
| 3GPP | third generation partnership project |
| 5G | fifth generation |
| 5GC | 5G core network |
| AF | activation frequency |
| AIOT or A-Iot | ambient IoT |
| AMF | access and mobility management function |
| BS | base station |
| BW | bandwidth |
| CU | central unit |
| DU | distributed unit |
| eNB (or eNodeB) | evolved Node B (e.g., an LTE base station) |
| EN-DC | E-UTRA-NR dual connectivity |
| en-gNB or En-gNB | node providing NR user plane and control plane protocol terminations towards the UE, and acting as secondary node in EN-DC |
| E-UTRA | evolved universal terrestrial radio access, i.e., the LTE radio access technology |
| gNB (or gNodeB) | base station for 5G/NR, i.e., a node providing NR user plane and control plane protocol terminations towards the UE, and connected via the NG interface to the 5GC |
| I/F | interface |
| IoT | internet of things |
| LTE I | long term evolution |
| MAC | medium access control |
| MG | measurement gap |
| MME | mobility management entity |
| MMSE | minimum mean square error |
| ng or NG | new generation |
| ng-eNB or NG-eNB | new generation eNB |
| NR | new radio |
| N/W or NW | network |
| OOK | on off keying |
| PAM | pulse amplitude modulation |
| PDCP | packet data convergence protocol |
| PHY | physical layer |
| PLS | physical layer security |
| PSK | phase shift keying |
| QAM | quadrature amplitude modulation |
| RAN | radio access network |
| Rel | release |
| RLC | radio link control |

| RRH | remote radio head |
| RRC | radio resource control |
| RU | radio unit |
| Rx | receiver |
| SDAP | service data adaptation protocol |
| SGW | serving gateway |
| SMF | session management function |
| TRF | tag response frequency |
| TS | technical specification |
| Tx | transmitter |
| UE | user equipment (e.g., a wireless, typically mobile device) |
| UPF | user plane function |

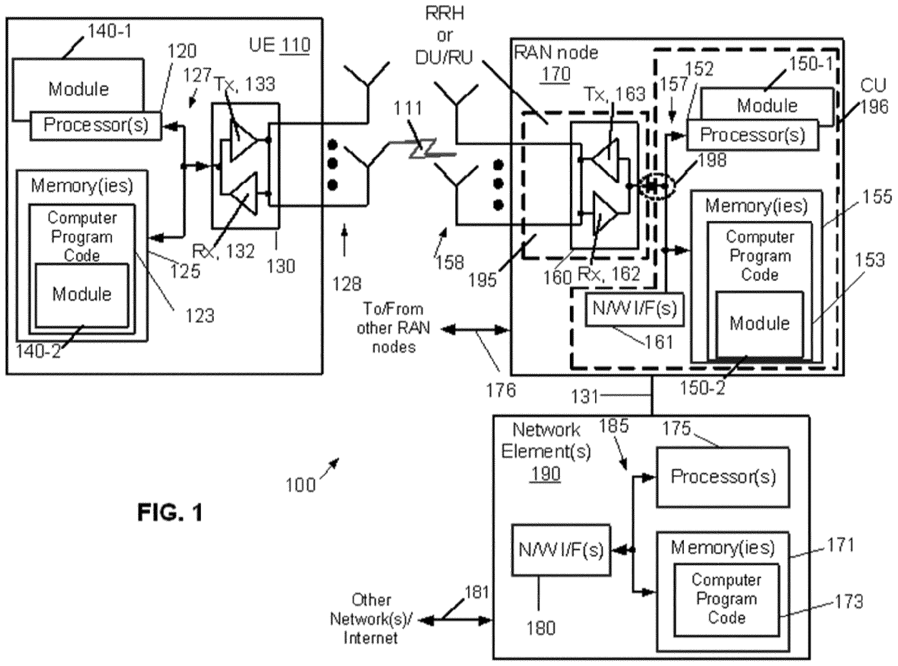

Turning to FIG. 1, this figure shows a block diagram of possible and non-limiting examples of devices in which features as described herein may be practiced. Features may be practiced with an AIOT device, an activator and a reader. In one example, the activator may be a user equipment (UE). In another example, the reader may be a radio access network (RAN) node, such as a gNb or base station for example. In another example, the reader may be a user equipment (UE). These are merely examples and should not be considered as limiting.

Fig. 1 shows a block diagram of one possible and non-limiting example of some devices. A user equipment (UE) 110, radio access network (RAN) node 170, and network element(s) 190 are illustrated. Examples of network equipment, network device, or a network entity might be understood to include, at least part of, a transmission reception point or a cell or a gNB or node for example. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Features as described herein may be used for protecting AIOT devices against eavesdropping by randomizing the AIOT transmission in modulation and phase domains using a AIOT device-specific random seed. The random seed may be encoded using a procedure that only allow the AIOT device to be able to decrypt it; to prevent an eavesdropper from acquiring the random seed from the activation signal.

Conventional cryptographic approaches are unsuitable for AIOT, given the severe power constraints of passive and semi-passive tags, rendering even basic cryptographic algorithms impractical for use. The current algorithms and protocols used in NR are generally not applicable to low power devices. An alternative solution to cryptography for wireless systems is physical layer security (PLS). Instead of using cryptography, PLS relies on the uniqueness of the transmitter-receiver channel, which can be used to uniquely identifying wireless transmitters, i.e., for authentication, or to secretly convey information to a wireless receiver, i.e., for privacy/confidentiality. PLS has been rather popular in the academia in the last decades, although it has never been very successful in the industry: PLS solutions have the advantage that are typically far less power hungry, as much computationally simpler, when compared to cryptographic solutions, although that comes with the drawback of lower performance. On the other hand, PLS may have the potential in certain deployments, for instance ambient internet of things (A-IoT or AIOT), where a device may have no battery at all or a battery with very little energy or power, and where cryptography is just not applicable. Still, for completely battery-less A-IoT tags, even PLS algorithms might be too complex, as the tag, that would be required to be able to estimate the channel toward the reader, is so simple that it is just transmitting when detecting the activator illumination signal.

The closest technology to A-IoT is RFID, where security:

- has been introduced in the form of cryptography for some systems with active tags -> targeted by 3GPP as device category C;

- for passive and semi-passive tags is guaranteed by the very short distance between tag and reader, such that for instance an eavesdropper that would like to detect the tag ID must be in physical vicinity to the tag or to the reader -> 3GPP would like to go beyond these deployments: although we may have short distance between tag and activator, the requirement is on large distance (up to hundreds of meters) between tag and reader.

  ○ It is believed that the only exception for passive tags is given by the EMV standard developed for contactless payment cards, that introduces some cryptography for authentication. That is possible because a) the frequency is very low, i.e., 13.56 MHz, and b) the distance is very short, i.e., few centimeters (and therefore also denoted as a NFC), so that that the tag is powered up with enough energy to implement this algorithm. -> Still, this type of deployment is not really in the scope of 3GPP study.

Security is an important aspect of any wired or wireless communications system, and has already been recognized as one of the main open challenges for A-IoT deployments. Similar to RFID (radio frequency identification) systems, for A-IoT two main functionalities should be guaranteed:

- Authentication: to confirm device identities and prevent tag cloning such as, for example, against attackers that try to send data while claiming to be a different device.

- Confidentiality/privacy: to ensure protection of data against eavesdropping.

New Radio (NR) is a very secure system, and many algorithms and protocols have been introduced to guarantee not only authentication and confidentiality/privacy, but also other security functionalities such as data integrity and availability. These protocols are implemented in different layers and locations, but mainly at PDCP and above layers, and rely on cryptography. However, the approach used by NR relies on cryptography which cannot be directly applied to this A-IoT. This is because passive and semi-passive tags used with A-IoT have such low power availability that even basic cryptographic algorithms are not applicable. Therefore, with features as described herein novel solutions and protocols may be provided to address the two security functionalities noted above with a confidentiality mechanism for A-IoT tags.

There have been some agreements in regard to 3GPP agreement related to Ambient IoT. In RAN#98e & #99, it was agreed to focus on three device types:

- Device A: Passive device with NO energy storage

- Device B: Passive device with energy storage

- Device C: active device with energy storage

Design targets for power consumptions:

- Device A $\leq$ 10 $\mu$W

- Device A < Device B < Device C

- Device C $\leq$ 1 mW

Device complexity design target:

- Device A: Comparable to UHF RFID

- Device A $\leq$ Device B $\leq$ Device C,

- Device C: Orders-of-magnitude lower than NB-IoT

In RAN#99, the Rapporteur listed the following functionalities for Ambient IoT in RAN:
Rapporteur: Assumptions on potentially required functionality to be supported need to be identified for Ambient IoT in RAN. To avoid detailed WG-level analysis, the potential functionalities are expected to be general and to meet the RAN design targets for Ambient IoT air interface. The following potential assumed RAN functionalities were found in the submitted papers (please refer also to design targets above).

a) Security (authentication, encryption, data integrity, authorization)
b) Positioning/localization/ranging
c) Support of channel access regulations associated with unlicensed spectrum.
d) Coexistence with legacy systems, devices, and network deployments
e) Energy harvesting signals, and/or use of legacy signals for energy harvesting
f) Identification and management of devices
g) Possibility of CN connection, including for sporadic and opportunistic small data between device and core

- Suggest to send LS to SA on feasibility of solutions with/without CN

h) Backscattering modulation
i) Envelope detection in receiver
j) Non-OFDM waveform in DL, robust against low-accuracy receiver architecture
k) Compact protocol layers design
l) Anti-collision methods / random access procedure / tag-reaction load distribution
m) Interference mitigation (intra-reader, inter-reader, reader - cellular network)
n) For topology (1) and (2), gNB/UE/intermediate node may need limited full-duplex capability
o) Mobility management procedures
p) Communicate with all, a subset, or one of the Ambient IoT devices present
q) Activation, deactivation of ambient IoT device
r) NW configuration of signals and channels for communication with Ambient IoT devices
s) Control of when tag reflects/reacts to a received signal when addressed
t) DRX
u) Synchronization scheme robust against low-accuracy receiver architecture
v) Coverage enhancement techniques with low device complexity

The following are connectivity topologies for Ambient IoT networks and devices. In all these topologies, the Ambient IoT device may be provided with a carrier wave from other node(s) either inside or outside the topology. The links in each topology may be bidirectional or unidirectional. BS, UE, assisting node, or intermediate node could be multiple BSs or UEs, respectively. The mixture of indoor and outdoor placement of such nodes is regarded as a network implementation choice.

Topology 1: BS <-> AloT device

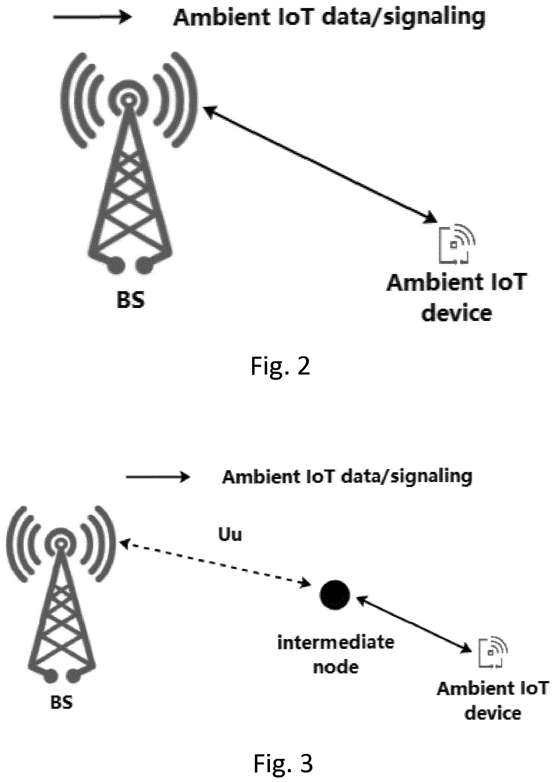

In Topology 1 (depicted in Fig. 2), the Ambient IoT device directly and bidirectionally communicates with a base station. The communication between the base station and the ambient IoT device includes Ambient IoT data and/or signaling. This topology includes the possibility that the BS transmitting to the Ambient IoT device is a different from the BS receiving from the Ambient IoT device.

Topology 2: BS <-> intermediate node <-> AloT device

In Topology 2 (depicted in Fig. 3), the Ambient IoT device communicates bidirectionally with an intermediate node between the device and base station. In this topology, the intermediate node can be a relay, IAB node, UE, repeater, etc. which is capable of Ambient IoT. The intermediate node transfers the information between BS and the Ambient IoT device.

Topology 3: BS <-> assisting node <-> AloT device <-> BS device

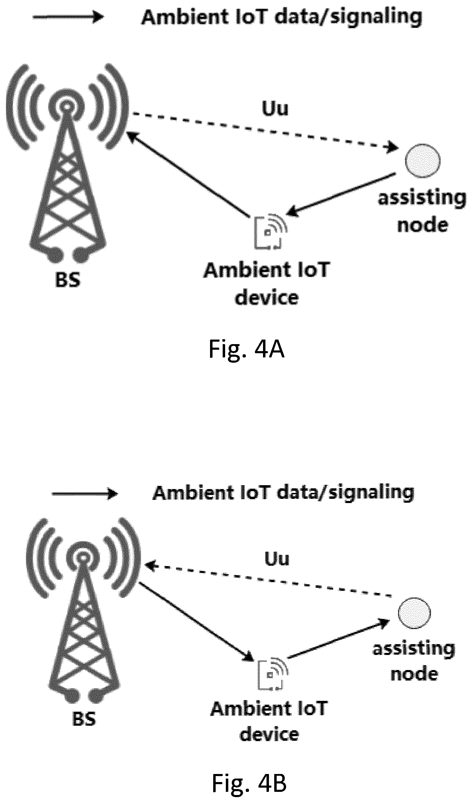

In Topology 3 (depicted in Figs. 4A and 4B), the Ambient IoT device transmits data/signaling to a base station and receives data/signaling from the assisting node; or the Ambient IoT device receives data/signaling from a base station and transmits data/signaling to the assisting node. In this topology, the assisting node can be a relay, IAB, UE, repeater, etc. which is capable of ambient IoT.

**Topology 4: UE <-> AloT device**

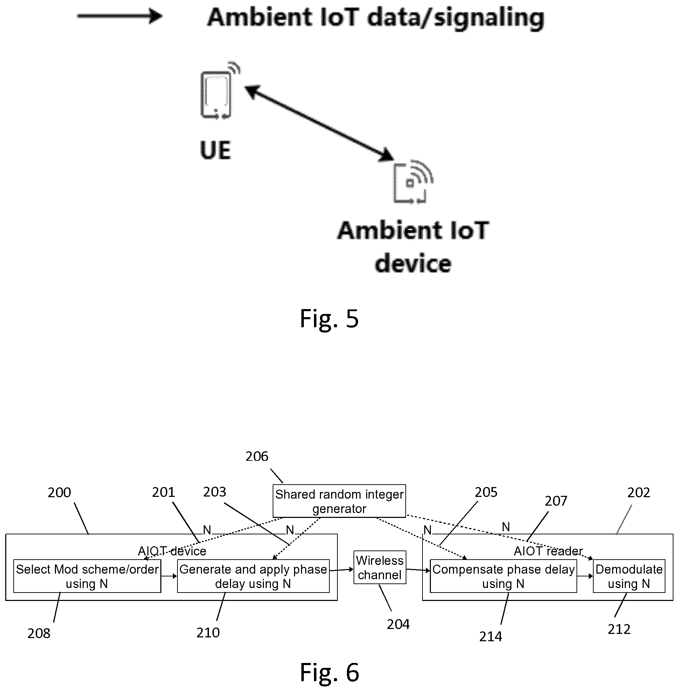

In Topology 4 (depicted in Fig. 5), the Ambient IoT device communicates bidirectionally with a UE. The communication between UE and the ambient IoT device includes Ambient IoT data and/or signaling.

**Features**

Features as noted herein may be used to provide a wave randomization in various domains; enabled via a common seed. This common seed may be conveyed by an activation signal, where such signal may also provide a role in resetting a secrecy mechanism when the AIOT device and reader become out of sync. Thus, a procedure may be provided to coordinate and reset said generation via an activator.

The seed (or seed information) may be used to commonly initialize the random number generator at both the reader and the AIOT device. The exchange of the common seed may be both authenticated and encrypted using security primitives in place for those interfaces. A random seed (or seed state, or just seed) is a number (or vector) which may be used to initialize a number generator or pseudorandom number generator. For a seed to be used in a pseudorandom number generator, it does not need to be random. Because of the nature of number generating algorithms, so long as the original seed is ignored, the rest of the values that the algorithm generates will follow probability distribution in a pseudorandom manner. A pseudorandom number generator's number sequence is completely determined by the seed: thus, if a pseudorandom number generator is reinitialized with the same seed, it will produce the same sequence of numbers. When a secret encryption key is pseudorandomly generated, having the seed will allow one to obtain the key. High entropy is important for selecting good random seed data. If the same random seed is deliberately shared, it becomes a secret key, so two or more systems using matching pseudorandom number algorithms and matching seeds can generate matching sequences of non-repeating numbers which can be used to synchronize remote systems.

A common agreed random seed may be exchanged between an activator and a reader. The AIOT device may receive an activation signal which includes seed information. The AIOT device may modulate the information content using a random modulation scheme or order that is generated based on the received random seed. Optionally or additionally, the AIOT device may apply a random phase delay to the AIOT signal. Based on the agreed random seed, the reader may de-rotate and demodulate the received signal as per a predefined agreement with the activator. Thus, the random seed received by the AIOT device may be used to the modulate the information content by changing the modulation scheme/order or phase delay.

In one type of example embodiment, the phase delay applied by the AIOT device may be selected in such a way that it points the transmission towards the legitimate reader only. The random number generator may drive the modulator such that the symbols transmitted by the AIOT device in the same AIOT signal belong all to the same modulation. The random number generator may drive the modulator such that the symbols transmitted by the AIOT device in the same AIOT signal belong to different modulations. The seed used to commonly initialize the random number generator at a reader and the AIOT device do not need to be AIOT device specific. The seed used to commonly initialize the random number generator at the reader and the AIOT device may be a same seed reused for different AIOT devices. The activation signal may be used for: a) targeting the AIOT detection by the reader or b) acting as a reset of the generator at both AIOT.

With features as described herein, a method may be provided for protection of an AIOT device against eavesdropping. The method may comprise use of randomizing the AIOT transmission (such as in modulation and phase domains for example) using an AIOT ID specific random seed. As further understood from the description below, and as illustrated with reference to Fig. 6, the AIOT device and the reader 202 may use a common random seed to prevent eavesdropping. This may comprise:

- Step 1 - An exchange between an activator 206 and a reader 202 to agree on the common random seed to be used (which impacts the next steps); and

- Step 2 - The AIOT device modulating the information content using a random modulation scheme and/or order that is generated based on the agreed random seed.

- Optionally or additionally, the AIOT device may apply a random phase delay to the AIOT signal and transmit the resulting signal over the wireless channel; again based on the agreed random seed.

- Optionally or additionally, the reader 202 may de-rotate the received signal by regenerating locally the random AIOT phase applied in step 2; again based on the agreed random seed.

- Step 3 - The reader 202 may demodulate the compensated signal by regenerating the modulation scheme and/or order used by the AIOT device; using as basis the agreed random seed.

Some technical advantages of the proposed method may include implementing an L1 randomizing scheme which:

- relies on a common seed and an activation signals to reset the seed, where the common seed may comprise a small set of predefined mappings which may be stored in the memory of an AIOT device;

- moves the complexity of the security mechanism away from the AIOT device and to the UE and gNB(s) instead.

Another technical advantage with the proposed method is to provide confidentiality of the AIOT communication, since an eavesdropper cannot decode the AIOT signals and, thus, cannot access the data that the AIOT devices transfer to the NR network.

Another technical advantage with the proposed method is that it is lightweight and does not require higher layer security protocols to be implemented at the AIOT device; since the AIOT device is expected to be power and computationally limited, and with only physical layer support.

Another technical advantage with the proposed method is that implementation may be modular in the sense that layers of confidentiality may be added/removed by exploiting selectivity in various domains like space, modulation, etc.

Fig. 6 is a diagram illustrating examples of an AIOT device 200 and an AIOT reader 202. The reader 202 may be, for example, the UE 110 or any other sort of suitable wireless electromagnetic reader. The reader 202 is used to interact with the AIOT device via a wireless link 204. The AIOT device 200 may, similar to the UE, comprise a processor, a memory (having instructions or code) and a transmitter and receiver for communicating with the reader and an activator 206. The activator 206 may comprise a random integer generator which may be shared by both the AIOT device 200 and the reader 202. The activator 206 may provide one or more signals 201, 203 to the AIOT device 200 and one or more signals 205, 207 to the reader 202. As illustrated with 208, the AIOT device 200 may use information in the signal 201 for determining or selecting a modulation scheme or order. As illustrated with 210, the AIOT device 200 may use information in the signal 203 for determining or generating and applying a phase delay. As illustrated with 212, the reader 202 may use information in the signal 205 for demodulating the signal provided from the AIOT device 200, through the link 204, which was modulated via 208. As illustrated with 214, the reader 202 may use information in the signal 207 for compensating for the phase delay used by the AIOT device 200 at 210. Signals 201 and 203 may be a common signal or multiple signals, and signals 205 and 207 may be a common signal or multiple signals. Also signals 205 and 207 may be bi-directional between the activator and the reader.

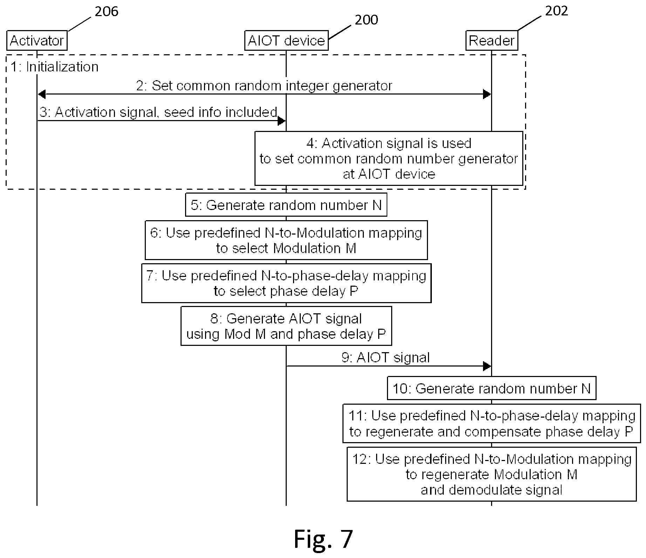

Referring now also to Fig. 7, one example of proposed signaling is shown. Fig. 7 shows an example signaling exchange among the reader 202, the activator 206 and the AIOT device 200. An initialization phase (steps 2-4) may be provided to make sure that the random number generator at the activator 206 is initialized with a same seed for both the reader and AIOT device 200. To achieve this initialization phase this example comprises:

- At Step 2: An exchange between the activator 206 and the reader 202 that triggers the agreement on the seed to be used. Such exchange may happen on the interface between the activator 206 and the reader 202. Examples may comprise:

◦ Sidelink (SL) / PC5 interface if both activator 206 and reader 202 are two UEs;

◦ Uplink and Downlink / Uu interface if the reader 202 is a gNB and the activator 206 is a UE (or vice versa);

◦ Xn interface if both the activator 206 and the reader 202 are two gNBs.

◦ Note: The exchange of the common seed may be both authenticated and encrypted using the security primitives in place for those interfaces.

- At Step 3: The activator 206 may inform the AIOT device 200 about such seed using the activation signal.

◦ Note: to prevent an eavesdropper from acquiring the common random seed from the activation signal, this activation signal may encode the common random seed using a procedure that only allow the AIoT device 200 to be able to decrypt it. For example, this may be based on an encryption key derived from the AIoT device private key.

- Step 4 may be provided where the activation signal is used to set the common random number at the AIOT device.

- Then, steps 5-9 define the operations at the AIOT device 200 , using the common random seed, to modulate the information content using a random modulation scheme and/or order; apply a random phase delay to the AIOT signal; and transmit the resulting signal over the wireless channel 204. More specifically:

◦ Step 5 has the AIOT device 200 generate the random number N;

◦ Step 6 may use a predefined N-to-modulation mapping to select the modulation M;

◦ Step 7 may use a predefined N-to-phase-delay mapping to select phase delay P;

◦ Step 8 may comprise the AIOT 200 generating the AIOT signal using modulation M and phase-delay P; and

◦ Step 9 may send the signal from the AIOT 200 to the reader 202.

- Steps 10-12 define the operations at the reader 202 to include to de-rotate the received signal by regenerating locally the random AIOT phase; and demodulate the compensated signal by regenerating the modulation scheme and/or order used by the AIOT device. More specifically:

ο Step 10 may comprise the reader 202 generating the random number N;

◦ Step 11 may comprise the reader 202 using a predefined N-to-phase delay mapping to regenerate and compensate phase delay P; and

ο Step 12 may comprise using a predefined N-to-modulation mapping to regenerate modulation M and demodulate the signal.

With the above, a technical advantage may be provided where the proposed method provides confidentiality of the AIOT communication, since an eavesdropper cannot decode the AIOT signals and, thus, cannot access the data that the AIOT devices transfer to the NR network.

**Phase delay**

Other example embodiments may be provided with variations regarding phase delay. The phase delay applied by the AIOT device may be selected in such a way that it points the transmission towards the legitimate reader only. For this to work, the AIOT device may be configured to transmit in the known/expected direction of the reader. This may be done either by the NW or by the activator itself, via a new configuration message. A technical advantage provided with this second type of embodiment is that spatial selectivity may be exploited to narrow down the coverage of the AIOT signal and, thus, make the AIOT signal hearable (detectable) only in a dedicated direction(s); a direction(s) where the reader is expected to be found. This means that the eavesdroppers outside these dedicated direction(s) will be prevented from hearing (detecting) the signal.

**Modulation**

Other example embodiments may be provided with variations regarding modulation. In one example embodiment, the random number generator may drive the modulator such that the symbols transmitted by the AIOT device in the same AIOT signal belong all to a same modulation such as, for example, a QAM (quadrature amplitude modulation) modulation. In another example embodiment, the random number generator may drive the modulator such that the symbols transmitted by the AIOT device in a same AIOT signal belong to different modulations, for example (assuming that L symbols are transmitted in 3 sets using 3 different modulations):

- The first L/3 symbols are transmitted with 4-QAM followed by

- L/3 symbols transmitted with 64-QAM followed by

- L/3 symbols transmitted with 16-QAM.

And the random number generator may be used to determine many parameters of such scheme as:

- The QAM order in each set of symbols;

- The number of symbols L in each set (potentially assuming different symbols per set);

- The number of sets.

In another example embodiment, the different modulations might not belong to a same type such as, for example, QAM, but can be completely different modulations such as, for example, M-QAM, M-PSK, M-PAM, and OOK.

A technical advantage provided with these types of modulation embodiments is that this offers an additional layer of AIOT comms confidentiality: by exploiting the selectivity in modulation domain, the mapping between bits and constellation points, and constellation order are constantly changing, and this makes the task of the eavesdropper harder, since the illegitimate device must also guess the modulation order during its attempt to decode the AIOT signal.

**Initialization**

Other example embodiments may be provided with variations regarding Initialization. In one example embodiment, the seed used to commonly initialize the random number generator at the reader and the AIOT device may be AIOT device specific such as, for example, with one seed per AIOT device and different AIOT devices have different seeds.

In another example embodiment, such restriction is not implemented, and a same seed may be reused for different AIOT devices. The receiver, i.e., the reader, and transmitter, i.e., the AIOT device, may know and share a same seed, and it is fine if another AIOT device reuse the same seed because what matters is that an attacker does not know such seed and, therefore, cannot decode what the AIOT device transmits.

A technical advantage provided with these types of initialization embodiments is that the solution offers a simpler implementation alternative of the confidentiality mechanisms from the previous embodiments, in the sense that the NR NW does not need to assign unique seeds to each of the potentially thousands of AIOT devices which may reside in the NR NW at a time.

**Reset**

Other example embodiments may be provided with variations regarding reset. In one type of example embodiment, the activation signal may serve multiple purposes such as, for example,:

- One type of activation targets the AIOT detection by the reader (as shown in the above embodiments), while,

- A second type of activation acts as a reset of the generator at both the AIOT device and the reader.

This may be provided such as if the generators become unsynchronized e.g., due to the reader past miss-detections, or the AIOT device being unable to triggers its transmission (e.g.., miss-detecting the activation signal).

A technical advantage provided with these types of reset embodiments is that the synchronization error may be easily corrected and, thus, it is ensured that the reader and the AIOT device itself use the same randomization scheme i.e., that the waveform the AIOT generates is the same as the one the reader expects. In this way, it is ensured that the reader can understand the AIOT device.

**An example Reader**

With one type of example reader, the reader may be provided as a UE as noted above. The UE reader method implements steps 10-12 from Fig. 7. For example, assume that the AIOT device generates a random number N ~dist(a, z, seed s), i.e. N is drawn from e.g. the uniform distribution in the interval [a, z], using the common seed s (in this case dist= Unit). This is a way of generating a random number N where the number N may be drawn from a distribution (in this example uniform), in the interval [a, z]. So, generically speaking, this example method may be used for picking a number at random from the interval [a, z]. N is then used to select a modulation scheme e.g., m = Modulation(N), where Modulation is a function that maps N to a modulation scheme and/or order. For example:
Modulation(m):

$$m = K - QAM,$$

$K = \log_2($*Round up N to the next highest power of 2*$)$ Then, the device generates the signal:

$$u(t) = \text{modulate } (b, m, t)$$

Where:

- t = 0: $(U - 1)T_s$, $T_s$ is the sampling time of the system

- the information bits b are modulated with m and according to the function *modulate.*

Note that the modulate function, i.e. the bit to modulation mapping can be randomly permutated using as basis the seed s, an example of such a method could be implemented using (as an example) the Fisher-Yates shuffle:

1. Initialize a random number generator with the seed s.
2. Create an array A with the sequence of modulation symbols to be permuted.
Note: the modulation symbols are mapped to bits as follows (using a BPSK modulation as an example):

- 00 -> m0
- 01 -> m1
- 10 -> m2
- 11 -> m3

3. For each index i from the length of A down to 1:

   a. Generate a random index j between 0 and i (both inclusive).
   b. Swap the elements at positions i and j in A.

4. Return the permuted array A of modulation symbols.
Note: the modulation symbols are mapped to bits after the random permutation as follows (again using a BPSK modulation as an example):

- 00 -> m3

- 01 -> m1

- 10->m0

- 11 -> m2

To this signal, a phase shift θ=f(N) is applied, where f is a function that maps N to an angle e.g.:

$$f = \text{Uniform}(0, 2\pi) \text{ with seed N}$$

The resulting signal $v(t)$ = u(t) exp(jΘ) is sent over a channel in carrier fc and in bandwidth B, where the channel impulse response is $h(t) = \sum_{l=1}^{L} h_l \delta(t - \tau_l)$, and consists of L multipaths, each characterized by a gain $h_l$, and a delay $\tau_l$.

The received signal at the reader is then y(t):

$$y(t) \approx (v * h)(t) + \epsilon(t) \qquad Equation \ (1)$$

$$v(t) = u(t) \exp(j\theta) \qquad Equation \ (2)$$

$$u(t) = modulate \ (b, m, t) \qquad Equation \ (3)$$

$$\theta = f(N) \qquad Equation \ (4)$$

$$m = Modulation(N) \qquad Equation \ (5)$$

$$N = dist(a, z, s) \qquad Equation \ (6)$$

The task of the reader is to determine the information bits b, having received signal y(t) and knowing (i.e. having been configured):

- dist, a, z, s in equation (6)
- modulation in equation (5)
- f in equation (4).

Note that in one embodiment, the information bit vector b represents the ID of the AIOT device. The reader possesses a list of IDs i.e., $S_b = \{b_1 ..., b_K\}$, and must identify which one of the AIOT device in the list $S_b$ replied.

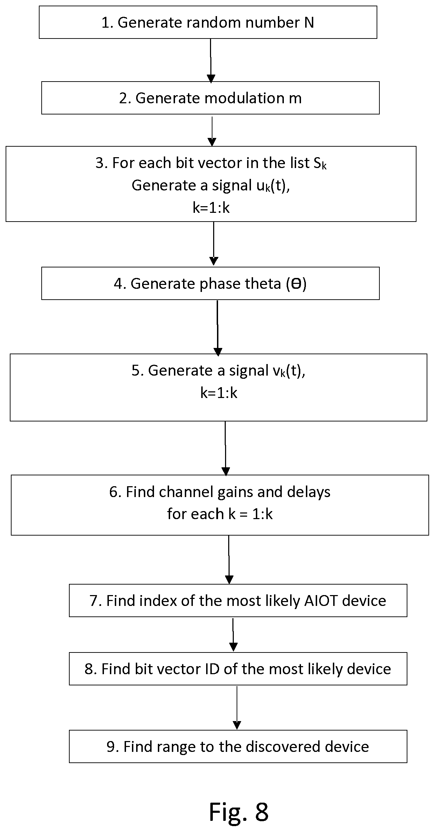

Referring also to Fig. 8, the reader may implement the following steps with reference to the equation numbers noted above:

1. Regenerates N by applying equation (6).

2. Regenerates m by applying equation (5).

3. Using m and the equation (3) the reader regenerates a signal $u_k(t)$, k = 1: K, for every bit vector ID $b_k$ in the list $S_b$.

4. Regenerates the phase Θ by applying equation (4).

5. Then, using equation (2) regenerates a signal $v_k(t)$, k = 1: K, for every bit vector ID $b_k$ in the list $S_b$.

6. For each signal $v_k(t)$, k = 1: K, it computes (assuming MMSE criterion as an example):

$$\widehat{h_k}, \widehat{\tau_k} = \arg \min \left| \left| y(t) - (v_k * h)(t) \right| \right|_2^2, \qquad k = 1: K$$

7. The index of the most likely AIOT device is then selected as:

$$\hat{k} = \arg \max\{\max(|h_1|^2), ..., \max(|h_K|^2)\}$$

8. And the ID of the device is thus $b_{\hat{k}}$.

9. Lastly, the range to the most likely AIOT device can be computed as (denoting with $\tau_{\widehat{k,1}}$ the estimated delay of the first path out of L):

$$r = c_0 \tau_{\widehat{k,1}},$$

$$c_0 = 3e8 \, \frac{m}{s}$$

After the most likely device (see 8 above) is determined, and the range (distance) to the most likely AIOT device (see 9 above) is determined, the reader may report the range to the NW. The NW may then locate the device, such as with using multiple readers reports for example.

Technical advantages provided with this type embodiment include:

- The proposed method implements an L1 randomizing scheme which:

  ○ relies on a common seed, a small set of predefined mappings which can be stored in the memory of an AIOT device, and an activation signals to reset the seed.

  ○ Moves the complexity of the security mechanism away from the AIOT device, and to the NR UE/gNBs instead.

- The proposed method provides confidentiality of the AIOT communication, since an eavesdropper cannot decode the AIOT signals and, thus, cannot access the data that the AIOT devices transfer to the NR network.

- The solution is lightweight and does not require higher layer security protocols to be implemented at the AIOT device; since the later device is expected to be power and computationally limited, and with only L1 layer support.

- The solution is modular in the sense that layers of confidentiality can be added/removed by exploiting selectivity in various domains like space, modulation, etc.

With features as described herein, a method may be provided for protection of AIOT devices against eavesdropping that relies on randomizing the AIOT transmission in modulation and phase domains using a AIOT ID specific random seed. If features as described herein are used with a UE, UE energy saving may be provided due to simpler computations.

In accordance with one example, an apparatus may be provided comprising: at least one processor; and at least one memory storing instructions that, when executed with the at least one processor, cause the apparatus to: receive an activation signal comprising seed information, where the seed information is common to seed information in a reader; generate a signal based upon the seed information from the received activation signal and at least one predetermined instruction; and send the generated signal from the apparatus.

The activation signal may comprise an internet-of-things activation signal. The seed information may comprise randomly generated encryption seed information. The at least one memory may store instructions that, when executed with the at least one processor, cause the apparatus to generate the signal comprises encrypting data information. The at least one predetermined instruction may be based, at least partially, upon the seed information. The at least one predetermined instruction may be in a set of instructions respectively based upon different seed information. The at least one memory may store instructions that, when executed with the at least one processor, cause the apparatus to predetermine the set of instructions in agreement with a sender of the activation signal prior to receiving the activation signal. The at least one memory may store instructions that, when executed with the at least one processor, cause the apparatus to set a random number generator in common with a common random integer generator of the reader and an activator. The at least one memory may store instructions that, when executed with the at least one processor, cause the apparatus to generate a random number based, at least partially, upon the seed information from the received activation signal. The at least one memory may store instructions that, when executed with the at least one processor, cause the apparatus to determine a modulation for the signal based upon the randomly generated number and a number-to-modulation mapping. The at least one memory may store instructions that, when executed with the at least one processor, cause the apparatus to determine a phase delay for the signal based upon the randomly generated number and a number-to-phase-delay mapping. The at least one memory may store instructions that, when executed with the at least one processor, cause the apparatus to determine the phase delay to determine a direction to direct the signal towards the reader. The at least one memory may store instructions that, when executed with the at least one processor, cause the apparatus to transmit symbols in the signal with a same modulation. The at least one memory may store instructions that, when executed with the at least one processor, cause the apparatus to transmit symbols in the signal at least partially with different modulations. The at least one memory may store instructions that, when executed with the at least one processor, cause the apparatus to transmit symbols in the signal with at least two of the modulations: M-QAM, M-PSK, M-PAM, or OOK. The seed information may be configured to be used for a single user device and a single reader. The seed information may be configured to be used for more than one user device. The received activation signal may be configured to reset a random number generator of the apparatus.

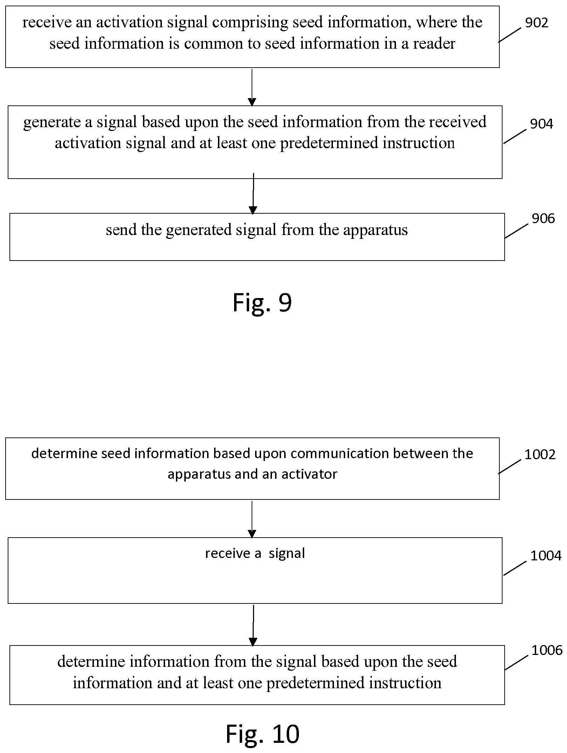

Referring also to Fig. 9, in accordance with one example, a method may be provided comprising: receiving, with an apparatus, an activation signal comprising seed information as illustrated with block 902, where the seed information is common to seed information in a reader; generating a signal based upon the seed information from the received activation signal and at least one predetermined instruction as illustrated with block 904; and sending the generated signal from the apparatus as illustrated with block 906. The activation signal may comprise an internet-of-things activation signal. The seed information may comprise randomly generated encryption seed information. The generating of the signal may comprise encrypting data information. The at least one predetermined instruction may be based, at least partially, upon the seed information. The at least one predetermined instruction may be in a set of instructions respectively based upon different seed information. The method may comprise predetermining the set of instructions in agreement with a sender of the activation signal prior to receiving the activation signal. The method may comprise setting a random number generator in common with a common random integer generator of the reader and an activator. The method may comprise generating a random number based, at least partially, upon the seed information from the received activation signal. The method may comprise determining a modulation for the signal based upon the randomly generated number and a number-to-modulation mapping. The method may comprise determining a phase delay for the signal based upon the randomly generated number and a number-to-phase-delay mapping. The method may comprise selecting the phase delay to select a direction to direct the signal towards the reader. The method may comprise transmitting symbols in the signal with a same modulation. The method may comprise transmitting symbols in the signal at least partially with different modulations. The method may comprise transmitting symbols in the signal with at least two of the modulations: M-QAM, M-PSK, M-PAM, or OOK. The seed information may be configured to be used for a single user device and a single reader. The seed information may be configured to be used for more than one user device. The received activation signal may be configured to reset a random number generator of the apparatus.

In accordance with one example, a non-transitory program storage device may be provided readable by an apparatus, tangibly embodying a program of instructions executable with the apparatus for performing operations, the operations comprising: receiving an activation signal comprising seed information, where the seed information is common to seed information in a reader; generating a signal based upon the seed information from the received activation signal and at least one predetermined instruction; and sending the generated signal from the apparatus.

In accordance with one example, an apparatus may be provided comprising: means for receiving an activation signal comprising seed information, where the seed information is common to seed information in a reader; means for generating a signal based upon the seed information from the received activation signal and at least one predetermined instruction; and means for sending the generated signal from the apparatus.

In accordance with one example, an apparatus may be provided comprising: circuitry configured for receiving an activation signal comprising seed information, where the seed information is common to seed information in a reader; circuitry configured for generating a signal based upon the seed information from the received activation signal and at least one predetermined instruction; and circuitry configured for sending the generated signal from the apparatus.

In accordance with one example, an apparatus may be provided comprising: at least one processor; and at least one memory storing instructions that, when executed with the at least one processor, cause the apparatus to: determine seed information based upon communication between the apparatus and an activator; receive a signal; and determine information from the signal based upon the seed information and at least one predetermined instruction.

The seed information may comprise internet-of-things seed information. The seed information may comprise randomly generated encryption seed information. The signal may comprise encrypting data information. The at least one memory may store instructions that, when executed with the at least one processor, cause the apparatus to select the at least one predetermined instruction from a plurality of predetermined instructions and is based, at least partially, upon the seed information. The at least one predetermined instruction may be in a set of the plurality of predetermined instructions respectively based upon different seed information. The at least one memory may store instructions that, when executed with the at least one processor, cause the apparatus to select the at least one predetermined instruction in agreement with the activator prior to receiving the signal. The at least one memory may store instructions that, when executed with the at least one processor, cause the apparatus to set a random number generator in common with a common random integer generator of at least one other device. The at least one memory may store instructions that, when executed with the at least one processor, cause the apparatus to generate a random number based, at least partially, upon the seed information, where the seed information is received from the activator. The at least one memory may store instructions that, when executed with the at least one processor, cause the apparatus to determine a demodulation for the signal based upon the randomly generated number and a number-to-modulation mapping. The at least one memory may store instructions that, when executed with the at least one processor, cause the apparatus to determine a phase delay compensation for the signal based upon the randomly generated number and a number-to-phase-delay mapping. The at least one memory may store instructions that, when executed with the at least one processor, cause the apparatus to reset the random number generator based upon an activation signal received by the apparatus. The activation signal may be configured to reset a random number generator in a user device.

Referring also to Fig. 10, in accordance with one example, a method may be provided comprising: determining seed information based upon communication between an apparatus and an activator as illustrated with block 1002; receiving a signal as illustrated with block 1004; and determining information from the signal based upon the seed information and at least one predetermined instruction as illustrated with block 1006. The seed information may comprise internet-of-things seed information. The seed information may comprise randomly generated encryption seed information. The signal may comprise encrypting data information. The method may comprise selecting the at least one predetermined instruction from a plurality of predetermined instructions based, at least partially, upon the seed information. The at least one predetermined instruction may be in a set of the plurality of predetermined instructions respectively based upon different seed information. The method may comprise selecting the at least one predetermined instruction in agreement with the activator prior to receiving the signal. The method may comprise setting a random number generator in common with a common random integer generator of at least one other device. The method may comprise generating a random number based, at least partially, upon the seed information, where the seed information is received from the activator. The method may comprise determining a demodulation for the signal based upon the randomly generated number and a number-to-modulation mapping. The method may comprise determining a phase delay compensation for the signal based upon the randomly generated number and a number-to-phase-delay mapping. The method may comprise resetting the random number generator based upon an activation signal received by the apparatus. The activation signal may be configured to reset a random number generator in a user device.

In accordance with one example, a non-transitory program storage device may be provided readable by an apparatus, tangibly embodying a program of instructions executable with the apparatus for performing operations, the operations comprising: determining seed information based upon communication between the apparatus and an activator; receiving a signal; and determining information from the signal based upon the seed information and at least one predetermined instruction.

In accordance with one example, an apparatus may be provided comprising: means for determining seed information based upon communication between the apparatus and an activator; means for receiving a signal; and means for determining information from the signal based upon the seed information and at least one predetermined instruction.

In accordance with one example, an apparatus may be provided comprising: circuitry configured for determining seed information based upon communication between the apparatus and an activator; circuitry configured for receiving a signal; and circuitry configured for determining information from the signal based upon the seed information and at least one predetermined instruction.

In accordance with one example, an apparatus may be provided comprising: at least one processor; and at least one memory storing instructions that, when executed with the at least one processor, cause the apparatus to: determine seed information based upon communication between the apparatus and a reader; send the seed information to a user device, where the user device is configured to use the seed information to form a signal to send to the reader.

The reader may comprise an internet-of-things reader and the user device comprises an internet-of-things device. The signal may comprise an internet-of-things communication data signal. The seed information may comprise randomly generated seed information. The at least one memory may store instructions that, when executed with the at least one processor, cause the apparatus to provide the seed information as common seed information shared between the apparatus and the reader. The at least one memory may store instructions that, when executed with the at least one processor, cause the apparatus to send the seed information with an activation signal comprises an internet-of-things activation signal. The seed information may be configured to be used with the user device to generate the signal comprising encrypting data information. The seed information may be configured to be used with a predetermined instruction at the user device to generate the signal, where the predetermined instruction is configured to be selected dependent, at least partially, upon the seed information. The seed information may be configured to be used to select the at least one predetermined instruction from a set of instructions respectively based upon different seed information. The seed information may be configured to be used with a random number generator of the user device in a common manner as with a random integer generator of the reader. The seed information may be configured to be used with the user device to determine a modulation for the signal based upon a randomly generated number, by the random number generator of the user device, and a number-to-modulation mapping in the user device. The seed information may be configured to be used with the user device to determine a phase delay for the signal based upon a randomly generated number, by the random number generator of the user device, and a number-to-phase-delay mapping. The at least one memory may store instructions that, when executed with the at least one processor, cause the apparatus to send at least one activation signal to the user device and the reader configured reset a random number generator of the user device and a random number generator of the reader.

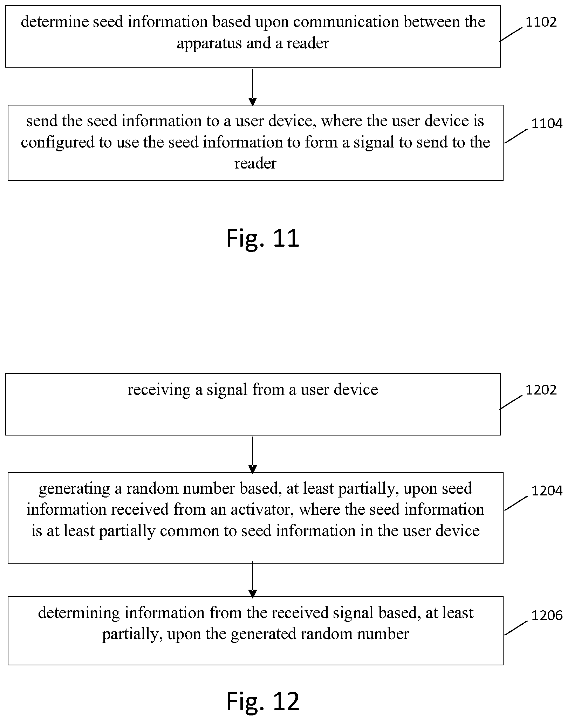

Referring also to Fig. 11, in accordance with one example, a method may be provided comprising: determining seed information based upon communication between an apparatus and a reader as illustrated with block 1102; sending the seed information to a user device as illustrated with block 1104, where the user device is configured to use the seed information to form a signal to send to the reader. The reader may comprise an internet-of-things reader and the user device comprises an internet-of-things device. The signal may comprise an internet-of-things communication data signal. The seed information may comprise randomly generated seed information. The method may comprise providing the seed information as common seed information shared between the apparatus and the reader. The sending of the seed information with an activation signal may comprise an internet-of-things activation signal. The seed information may be configured to be used with the user device to generate the signal comprising encrypting data information. The seed information may be configured to be used with a predetermined instruction at the user device to generate the signal, where the predetermined instruction is configured to be selected dependent, at least partially, upon the seed information. The seed information may be configured to be used to select the at least one predetermined instruction from a set of instructions respectively based upon different seed information. The seed information may be configured to be used with a random number generator of the user device in a common manner as with a random integer generator of the reader. The seed information may be configured to be used with the user device to determine a modulation for the signal based upon a randomly generated number, by the random number generator of the user device, and a number-to-modulation mapping in the user device. The seed information may be configured to be used with the user device to determine a phase delay for the signal based upon a randomly generated number, by the random number generator of the user device, and a number-to-phase-delay mapping. The method may comprise sending at least one activation signal to the user device and the reader, where the at least one activation signal is configured to reset a random number generator of the user device and a random number generator of the reader.

In accordance with one example, a non-transitory program storage device is provided readable by an apparatus, tangibly embodying a program of instructions executable with the apparatus for performing operations, the operations comprising: determining seed information based upon communication between the apparatus and a reader; sending the seed information to a user device, where the user device is configured to use the seed information to form a signal to send to the reader.

In accordance with one example, an apparatus may be provided comprising: means for determining seed information based upon communication between the apparatus and a reader; and means for sending the seed information to a user device, where the user device is configured to use the seed information to form a signal to send to the reader.

In accordance with one example, an apparatus may be provided comprising: circuitry configured for determining seed information based upon communication between the apparatus and a reader; and circuitry configured for sending the seed information to a user device, where the user device is configured to use the seed information to form a signal to send to the reader.

In accordance with one example, an apparatus may be provided comprising: at least one processor; and at least one memory storing instructions that, when executed with the at least one processor, cause the apparatus to: receive a signal from a user device; generate a random number based, at least partially, upon seed information received from an activator, where the seed information is at least partially common to seed information in the user device; and determine information from the received signal based, at least partially, upon the generated random number.

The at least one memory may store instructions that, when executed with the at least one processor, cause the apparatus to generate the random number based, at least partially, upon a uniform distribution in an interval. The at least one memory may store instructions that, when executed with the at least one processor, cause the apparatus to determine a modulation at least partially based upon the generated random number. The at least one memory may store instructions that, when executed with the at least one processor, cause the apparatus to determine a phase based upon the generated random number. The at least one memory may store instructions that, when executed with the at least one processor, cause the apparatus to determine a waveform at least partially based upon the generated random number. The apparatus may be configured to determine the waveform based upon at least one of: modulation or phase information. The at least one memory may store instructions that, when executed with the at least one processor, cause the apparatus to use the modulation to generate signals for bit vector identifications in a list of device identifications. The at least one memory may store instructions that, when executed with the at least one processor, cause the apparatus to use the phase to determine resulting signals for the bit vector identifications. The at least one memory may store instructions that, when executed with the at least one processor, cause the apparatus to use a predefined random number to phase delay mapping to regenerate a phase delay, used in the user device to create the signal, and compensate for the phase delay in the received signal. The at least one memory may store instructions that, when executed with the at least one processor, cause the apparatus to determine channel gains and delays for the resulting signals. The at least one memory may store instructions that, when executed with the at least one processor, cause the apparatus to determine the information comprising identifying the user device as a most likely device from an index of devices. The at least one memory may store instructions that, when executed with the at least one processor, cause the apparatus to determine the information comprising finding a bit vector identification of the most likely device based at least partially on the index of devices. The determined information may comprise range information regarding a range between the apparatus and the user device. The at least one memory may store instructions that, when executed with the at least one processor, cause the apparatus to send a report from the apparatus, where the report comprises the range information. The at least one memory may store instructions that, when executed with the at least one processor, cause the apparatus to use a predefined random number to phase information mapping to regenerate a phase delay, used in the user device to create the signal, and compensate for the phase delay in the received signal. The phase delay in the received signal may be configured based, at least partially, upon a random number generated in the user device which is the same as the generated random number in the apparatus. The at least one memory may store instructions that, when executed with the at least one processor, cause the apparatus to use a predefined random number to modulation mapping to regenerate modulation, used in the user device to create the signal, and demodulate the received signal. The modulation in the received signal may be configured based, at least partially, upon a random number generated in the user device which is the same as the generated random number in the apparatus. The user device may comprise an ambient internet of things device. The received signal may comprise encrypting data information. The received signal may comprise an internet-of-things activation signal. The at least one memory may store instructions that, when executed with the at least one processor, cause the apparatus to receive the seed information from the activator, and at least partially configure a random number generator based upon the seed information, prior to receiving the activation signal.

Referring also to Fig. 12, in accordance with one example, a method may be provided comprising: receiving a signal from a user device as illustrated with block 1202; generating a random number based, at least partially, upon seed information received from an activator as illustrated with block 1204, where the seed information is at least partially common to seed information in the user device; and determining information from the received signal based, at least partially, upon the generated random number as illustrated with block 1206. The generating of the random number may be based, at least partially, upon a uniform distribution in an interval. The method may comprise determining a waveform at least partially based upon the generated random number. The determining of the waveform may be based upon at least one of: modulation or phase information. The method may comprise using the modulation to generate signals for bit vector identifications in a list of device identifications. The method may comprise using the phase to determine resulting signals for the bit vector identifications. The method may comprise determining channel gains and delays for the resulting signals. The method may comprise identifying the user device as a most likely device from an index of devices. The method may comprise finding a bit vector identification of the most likely device based at least partially on the index of devices. The determined information may comprise range information regarding a range between the apparatus and the user device. The method may comprise sending a report from the apparatus, where the report comprises the range information. The method may comprise using a predefined random number to phase information mapping to regenerate a phase delay, used in the user device to create the signal, and compensating for the phase delay in the received signal. The phase delay in the received signal may be configured based, at least partially, upon a random number generated in the user device which is the same as the generated random number in the apparatus. The method may comprise using a predefined random number to modulation mapping to regenerate modulation, used in the user device to create the signal, and demodulating the received signal. The modulation in the received signal may be configured based, at least partially, upon a random number generated in the user device which is the same as the generated random number in the apparatus. The user device may comprise an ambient internet of things device. The received signal may comprise encrypting data information. The received signal may comprise an internet-of-things activation signal. The method may comprise receiving the seed information from the activator, and at least partially configuring a random number generator based upon the seed information, prior to receiving the activation signal.

In accordance with one example, a non-transitory program storage device may be provided readable by an apparatus, tangibly embodying a program of instructions executable with the apparatus for performing operations, the operations comprising: receiving a signal from a user device; generating a random number based, at least partially, upon seed information received from an activator, where the seed information is at least partially common to seed information in the user device; and determining information from the received signal based, at least partially, upon the generated random number.

In accordance with one example, an apparatus may be provided comprising: means for receiving a signal from a user device; means for generating a random number based, at least partially, upon seed information received from an activator, where the seed information is at least partially common to seed information in the user device; and means for determining information from the received signal based, at least partially, upon the generated random number.

In accordance with one example, an apparatus may be provided comprising: circuitry configured for receiving a signal from a user device; circuitry configured for generating a random number based, at least partially, upon seed information received from an activator, where the seed information is at least partially common to seed information in the user device; and circuitry configured for determining information from the received signal based, at least partially, upon the

generated random number.

**[0090]** It should be noted that the word "wave" may be interchangeably used with the word "signal". In other words, the signal may be provided in the form of a wave, such as a wave having a specific waveform.

**[0091]** The term "non-transitory," as used herein, is a limitation of the medium itself (i.e., tangible, not a signal) as opposed to a limitation on data storage persistency (e.g., RAM vs. ROM).

**[0092]** As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(iii) hardware circuit(s) and or processor(s), such as a microprocessor(s) or a portion of a microprocessor(s), that requires software (e.g., firmware) for operation, but the software may not be present when it is not needed for operation."

**[0093]** This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

**[0094]** It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modifications and variances which fall within the scope of the appended claims.

## Claims

**1.** An apparatus comprising:

means for receiving a signal from a user device;
means for generating a random number based, at least partially, upon seed information received from an activator, where the seed information is at least partially common to seed information in the user device; and
means for determining information from the received signal based, at least partially, upon the generated random number.

**2.** The apparatus as claimed in claim 1, further comprising means for generating the random number based, at least partially, upon a uniform distribution in an interval.

**3.** The apparatus as claimed in any one of claims 1-2, further comprising means for determining a waveform:

at least partially based upon the generated random number; and/or
based upon at least one of: modulation or phase information.

**4.** The apparatus as claimed in any previous claim, further comprising at least one of the following:

means for using the modulation to generate signals for bit vector identifications in a list of device identifications; or
means for using the phase to determine resulting signals for the bit vector identifications, and preferably means for determining channel gains and delays for the resulting signals.

5. The apparatus as claimed in any previous claim, further comprising:

   means for determining the information comprising identifying the user device as a most likely device from an index of devices; and preferably
   means for determine the information comprising finding a bit vector identification of the most likely device based at least partially on the index of devices.

6. The apparatus as claimed in any previous claim, where the determined information comprises range information regarding a range between the apparatus and the user device; and preferably
   where the apparatus further comprises means for sending a report from the apparatus, where the report comprises the range information.

7. The apparatus as claimed in any previous claim, further comprising means for using a predefined random number to phase information mapping to regenerate a phase delay, used in the user device to create the signal, and compensate for the phase delay in the received signal; and preferably
   where the phase delay in the received signal is configured based, at least partially, upon a random number generated in the user device which is the same as the generated random number in the apparatus.

8. The apparatus as claimed in any previous claim, the apparatus further comprises means for using a predefined random number to modulation mapping to regenerate modulation, used in the user device to create the signal, and demodulate the received signal; and preferably
   where the modulation in the received signal is configured based, at least partially, upon a random number generated in the user device which is the same as the generated random number in the apparatus.

9. The apparatus as claimed in any previous claim, where the user device comprises an ambient internet of things device.

10. The apparatus as claimed in any previous claim, where the received signal comprises encrypting data information.

11. The apparatus as claimed in any previous claim, where the received signal comprises an internet-of-things activation signal; and preferably
    where the apparatus further comprises means for receiving the seed information from the activator, and at least partially configuring a random number generator based upon the seed information, prior to receiving the activation signal.

12. A method comprising:

    receiving a signal from a user device;
    generating a random number based, at least partially, upon seed information received from an activator, where the seed information is at least partially common to seed information in the user device; and
    determining information from the received signal based, at least partially, upon the generated random number.

13. The method as claimed in claim 12, where generating the random number is based, at least partially, upon a uniform distribution in an interval.

14. The method as claimed in any one of claims 12-13, comprising determining a waveform at least partially based upon the generated random number; and preferably
    where the determining of the waveform is based upon at least one of: modulation or phase information.

15. A computer program comprising instructions which, when executed by an apparatus, causes the apparatus to perform:

    receiving a signal from a user device;
    generating a random number based, at least partially, upon seed information received from an activator, where the seed information is at least partially common to seed information in the user device; and
    determining information from the received signal based, at least partially, upon the generated random number.

FIG. 1

Ambient IoT data/signaling

BS

Ambient IoT device

Fig. 2

Ambient IoT data/signaling

Uu

BS

intermediate node

Ambient IoT device

Fig. 3

Ambient IoT data/signaling

Uu

BS

Ambient IoT
device

assisting
node

Fig. 4A

Ambient IoT data/signaling

Uu

BS

Ambient IoT
device

assisting
node

Fig. 4B

Ambient IoT data/signaling

UE

Ambient IoT
device

Fig. 5

206

200          201    203          Shared random integer          205          202
                                  generator                            207

                                N          N                    N          N

AIOT device                                                    AIOT reader

| Select Mod scheme/order using N | → | Generate and apply phase delay using N | → | Wireless channel | → | Compensate phase delay using N | → | Demodulate using N |

208                  210                        204          214          212

Fig. 6

206     200     202

| Activator | | AIOT device | | Reader |

1: Initialization

2: Set common random integer generator

3: Activation signal, seed info included

4: Activation signal is used
to set common random number generator
at AIOT device

5: Generate random number N

6: Use predefined N-to-Modulation mapping
to select Modulation M

7: Use predefined N-to-phase-delay mapping
to select phase delay P

8: Generate AIOT signal
using Mod M and phase delay P

9: AIOT signal

10: Generate random number N

11: Use predefined N-to-phase-delay mapping
to regenerate and compensate phase delay P

12: Use predefined N-to-Modulation mapping
to regenerate Modulation M
and demodulate signal

## Fig. 7

1. Generate random number N

2. Generate modulation m

3. For each bit vector in the list $S_k$
Generate a signal $u_k(t)$,
k=1:k

4. Generate phase theta ($\theta$)

5. Generate a signal $v_k(t)$,
k=1:k

6. Find channel gains and delays
for each k = 1:k

7. Find index of the most likely AIOT device

8. Find bit vector ID of the most likely device

9. Find range to the discovered device

Fig. 8

receive an activation signal comprising seed information, where the seed information is common to seed information in a reader ⌐ 902

generate a signal based upon the seed information from the received activation signal and at least one predetermined instruction ⌐ 904

send the generated signal from the apparatus ⌐ 906

## Fig. 9

determine seed information based upon communication between the apparatus and an activator ⌐ 1002

receive a signal ⌐ 1004

determine information from the signal based upon the seed information and at least one predetermined instruction ⌐ 1006

## Fig. 10

determine seed information based upon communication between the apparatus and a reader — 1102

send the seed information to a user device, where the user device is configured to use the seed information to form a signal to send to the reader — 1104

## Fig. 11

receiving a signal from a user device — 1202

generating a random number based, at least partially, upon seed information received from an activator, where the seed information is at least partially common to seed information in the user device — 1204

determining information from the received signal based, at least partially, upon the generated random number — 1206

## Fig. 12

Europäisches
Patentamt
European
Patent Office
Office européen
des brevets

# EUROPEAN SEARCH REPORT

**Application Number**

EP 24 21 7730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TORO USMAN SALEH ET AL: "Backscatter Wireless Communications and Sensing in Green Internet of Things", IEEE TRANSACTIONS ON GREEN COMMUNICATIONS AND NETWORKING, IEEE, vol. 6, no. 1, 13 July 2021 (2021-07-13), pages 37-55, XP011900688, DOI: 10.1109/TGCN.2021.3095792 [retrieved on 2022-02-15] * sections I, II, IV, figures 1, 3, 4 * | 1-15 | INV. H04L9/06 |
| X | PARK HOORIN ET AL: "Tagora: A Collision-Exploitative RFID Authentication Protocol Based on Cross-Layer Approach", IEEE INTERNET OF THINGS JOURNAL, IEEE, USA, vol. 7, no. 4, 11 February 2020 (2020-02-11), pages 3571-3585, XP011783830, DOI: 10.1109/JIOT.2020.2972915 [retrieved on 2020-04-14] * sctions II, III, IV, figures 1, 6 * | 1-15 | |
| X | HAITHAM HASSANIEH JUE WANG DINA KATABI MIT MIT TADAYOSHI KOHNO MIT UNIVERSITY OF WASHINGTON: "Securing RFIDs by Randomizing the Modulation and Channel", USENIX, USENIX, THE ADVANCED COMPUTING SYSTEMS ASSOCIATION , 4 May 2015 (2015-05-04), pages 242-256, XP061024740, Retrieved from the Internet: URL:https://www.usenix.org/sites/default/files/nsdi15_full_proceedings_interior.pdf [retrieved on 2015-05-04] * sections 3, 4 * | 1-15 | **TECHNICAL FIELDS SEARCHED (IPC)** H04L |

The present search report has been drawn up for all claims

| Place of search | Date of completion of the search | Examiner |
|---|---|---|
| Munich | 31 March 2025 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)